# EUROPEAN PATENT APPLICATION

(11) **EP 4 787 613 A1**
(43) Date of publication of application: **05.08.2026**
(21) Application number: 24871981.7
(22) Date of filing: 18.09.2024
(51) Int. Cl.: H01M 50/59, H01M 10/04, H01M 10/0587, H01M 50/463, H01M 50/586

(54) **CYLINDRICAL BATTERY**

(30) Priority: 29.09.2023 JP 2023168969
(71) Applicant: PANASONIC INTELLECTUAL PROPERTY MANAGEMENT CO., LTD., Kadoma-shi, Osaka 571-0057 (JP)
(72) Inventor: MIZAWA, Atsushi, Kadoma-shi, Osaka 571-0057 (JP)
(74) Representative: Eisenführ Speiser
(86) International application number: PCT/JP2024/033179
(87) International publication number: WO 2025/070189

(57) **Abstract**

A cylindrical battery (10) comprises: a wound-type electrode body (14) obtained by winding a positive electrode (11) and a negative electrode (12) with a separator (13) interposed therebetween; an outer can (15) which has a cylindrical shape provided with a bottom for accommodating the electrode body (14) and in which an annular groove (20) protruding inward is formed in the vicinity of an opening of the outer can; and a sealing body (16) which is aligned by the groove (20) and which closes the opening of the outer can (15). A wound outer peripheral part of the electrode body (14) is wound by shifting the separator (13) in the axial direction of the electrode body (14), and the separator (13) of the wound outer peripheral part comprises an extension part (60) one edge of which extends in the axial direction of the electrode body (14) beyond the edge of the electrode body (14). The extension part (60) bends inward in the radial direction of the electrode body (14) and is interposed between the groove (20) and the electrode body (14) so as to provide insulation therebetween.

## Description

### TECHNICAL FIELD

The present invention generally relates to a cylindrical battery, and more particularly to a structure of a separator at an outer circumference in the cylindrical battery.

### BACKGROUND ART

Conventionally and widely known is a cylindrical battery that comprises a wound-type electrode assembly in which a positive electrode and a negative electrode are spirally wound with a separator interposed therebetween, a bottomed cylindrical housing can that houses the electrode assembly, a sealing assembly with which an opening portion of the housing can is capped, and an insulating plate that is disposed on the electrode assembly (for example, see PATENT LITERATURE 1). In the housing can of the cylindrical battery, a groove that supports the sealing assembly is generally formed. A lead extending from the negative electrode of the electrode assembly is connected to the housing can, and the housing can serves as a negative electrode external terminal. An insulating plate is necessary to prevent contact between the groove of the housing can and the positive electrode of the electrode assembly.

### CITATION LIST

### PATENT LITERATURE

PATENT LITERATURE 1: Japanese Unexamined Patent Application Publication No. Hei06-243857

### SUMMARY

However, a battery configuration in which the insulating plate disposed on the electrode assembly prevents a short circuit between the groove of the housing can and the electrode assembly causes an increase in number of components, and an increase in number of manufacturing processes, leading to an increase in cost of the battery.

A cylindrical battery according to the present disclosure comprises a wound-type electrode assembly in which a positive electrode and a negative electrode are wound with a separator interposed the positive electrode and the negative electrode, a housing can that has a bottomed cylindrical shape for housing the electrode assembly and in which an annular groove projecting inward is formed in a vicinity of an opening portion, and a sealing assembly that is positioned by the groove and with which the opening portion of the housing can is capped, in which in a winding outer circumferential portion of the electrode assembly, the separator is wound to be displaced relative to an axial direction of the electrode assembly, the separator in the winding outer circumferential portion comprises an extension portion in which one end edge of the separator extends in the axial direction of the electrode assembly farther than an end edge of the electrode assembly, and the extension portion is bent toward a radially inner side of the electrode assembly, and is interposed between the groove and the electrode assembly to insulate the groove from the electrode assembly.

According to a cylindrical battery according to the present disclosure, the number of components of the cylindrical battery can be reduced, and the number of manufacturing processes can be reduced.

### BRIEF DESCRIPTION OF DRAWING

FIG. 1 illustrates an axial sectional shape of a cylindrical battery of an example of an embodiment.
FIG. 2 is a perspective view of an electrode assembly of an example of an embodiment.
FIG. 3 illustrates an enlarged portion of a portion A in FIG. 1.
FIG. 4 is a diagram illustrating a structure of a separator in a winding outer circumferential portion.

### DESCRIPTION OF EMBODIMENTS

Hereinafter, an embodiment of a cylindrical battery according to the present invention will be described in detail with reference to the drawings. The embodiment described below is merely an example, and the present invention is not limited to the embodiment described below. Any forms made up by selectively combining a plurality of embodiments and modified examples described below are encompassed in the present invention.

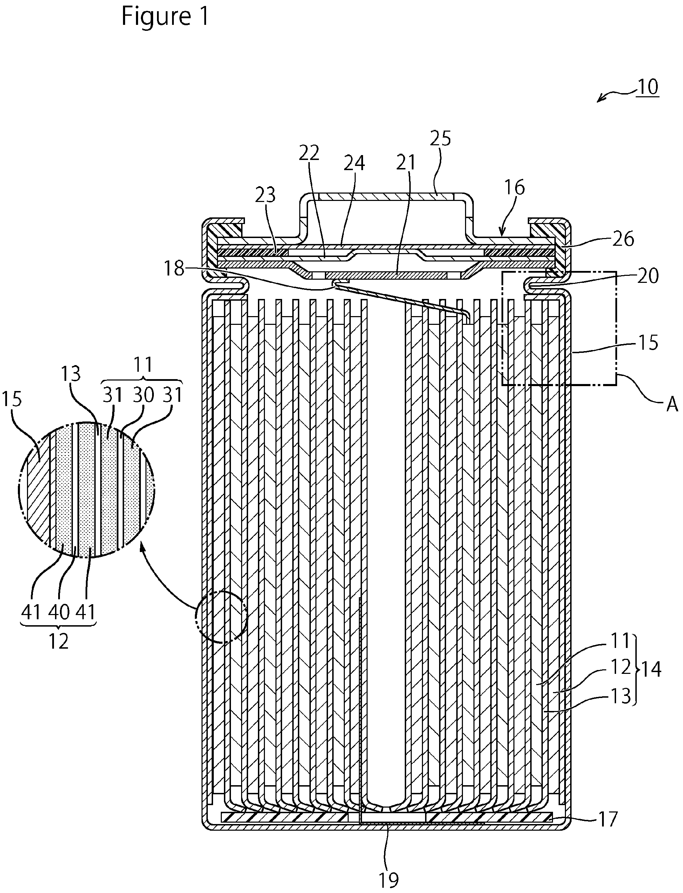

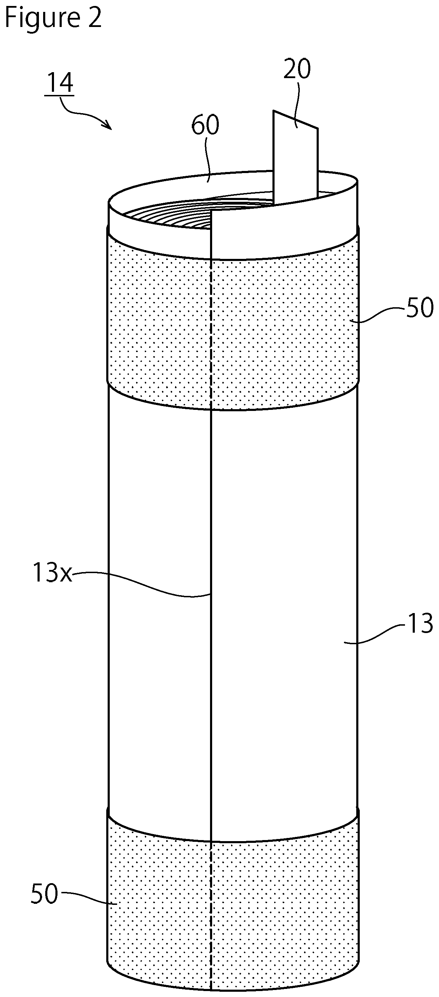

A cylindrical battery 10 of an example of the present embodiment will be described in detail using FIGS. 1 and 2. FIG. 1 is a diagram schematically illustrating an axial cross section of the cylindrical battery 10 of an example of an embodiment. FIG. 2 is a perspective view illustrating an electrode assembly 14.

As illustrated in FIG. 1, the cylindrical battery 10 comprises the electrode assembly 14 having a wound structure, an electrolyte, and a bottomed cylindrical housing can 15 that houses the electrode assembly 14 and the electrolyte. The electrode assembly 14 has a positive electrode 11, a negative electrode 12, and a separator 13, and has a structure in which the positive electrode 11 and the negative electrode 12 are spirally wound with the separator 13 between the positive electrode 11 and the negative electrode 12. The housing can 15 is a bottom cylindrical metallic container in which one side in an axial direction is opened, and an opening portion of the housing can 15 is capped with a sealing assembly 16. Hereinafter, for convenience of description, the sealing assembly 16 side of the cylindrical battery 10 will be described as the upper side, and a bottom side of the housing can 15 will be described as the lower side.

The electrolyte may be an aqueous electrolyte, but in the present embodiment, a non-aqueous electrolyte is used. The non-aqueous electrolyte has the conductivity for lithium ions. The non-aqueous electrolyte may be a liquid electrolyte (electrolyte liquid) or may be a solid electrolyte. The cylindrical battery 10 is, for example, a non-aqueous electrolyte secondary battery, and, especially, is a lithium ion battery.

The liquid electrolyte (electrolyte liquid) includes a non-aqueous solvent, and an electrolyte salt dissolved in the non-aqueous solvent. For the non-aqueous solvent, esters, ethers, nitriles, amides, a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used, for example.

As the solid electrolyte, a solid or gel polymer electrolyte, an inorganic solid electrolyte, and the like can be used, for example. As the inorganic solid electrolyte, a known material for an all-solid-state lithium ion secondary battery or the like (for example, an oxide-type solid electrolyte, a sulfide-type solid electrolyte, halogen-type solid electrolyte, and the like) can be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13 that are included in the electrode assembly 14 are all a band-shaped elongated body and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The separator 13 is formed to be one size larger than at least the positive electrode 11, and two separators are disposed so as to sandwich the positive electrode 11. The cylindrical battery 10 comprises an insulating plate 17 disposed on the lower side of the electrode assembly 14.

The electrode assembly 14 has a positive electrode lead 18 connected by the positive electrode 11 by means of welding or the like, and a negative electrode lead 19 connected to the negative electrode 12 by means of welding or the like. In the present embodiment, the positive electrode lead 18 is connected to a center portion of the positive electrode 11 in the longitudinal direction, and the negative electrode lead 19 is connected to an end potion of the negative electrode 12 in the longitudinal direction, the end portion being located on a winding core side of the electrode assembly 14.

The positive electrode 11 has a positive electrode core 30, and a positive electrode mixture layer 31 formed on the positive electrode core 30. For the positive electrode core 30, a foil of metal such as aluminum or an aluminum alloy, which is stable within a potential range of the positive electrode 11, a film in which such a metal is disposed on a surface layer thereof, and the like can be used. The positive electrode mixture layer 31 includes a positive electrode active material, a conductive agent, and a binder, and is preferably formed on each surface of the positive electrode core 30 except for a potion to which the positive electrode lead 18 is welded. The positive electrode 11 can be produced by, for example, applying a positive electrode mixture slurry including the positive electrode active material, the conductive agent, the binder, and the like on the positive electrode core 30, drying the resulting coating film, and then compressing the coating film to form the positive electrode mixture layer 31 on each surface of the positive electrode core 30.

The positive electrode mixture layer 31 generally includes a particulate lithium-metal composite oxide as the positive electrode active material. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

The negative electrode 12 has a negative electrode core 40, and a negative electrode mixture layer 41 formed on the negative electrode core 40. For the negative electrode core 40, a foil of metal such as copper or a copper alloy, which is stable within a potential range of the negative electrode 12, a film in which such a metal is disposed on a surface layer thereof, and the like can be used. The negative electrode mixture layer 41 includes a negative electrode active material, a binder, and a conductive agent as necessary, and is preferably formed on each surface of the negative electrode core 40 except for a potion to which the negative electrode lead 19 described later is welded. The negative electrode 12 can be produced by applying a negative electrode mixture slurry including the negative electrode active material, the binder, and the like on a surface of the negative electrode core 40, drying the resulting coating film, and then compressing the coating film to form the negative electrode mixture layer 41 on each surface of the negative electrode core 40.

The negative electrode mixture layer 41 generally includes a carbon material that reversibly occlude and release lithium ions, as the negative electrode active material. A preferable example of carbon material is a graphite such as a natural graphite or an artificial graphite. As the negative electrode active material, a material including at least one of an element that forms an alloy with Li, such as Si and Sn, and a material containing such an element may be used. Among them, a composite material containing Si is preferably used. A preferable Si-containing composite material includes composite particles including an ion conductive phase, and an Si phase dispersed in the ion conductive phase. As the negative electrode active material, the carbon material and the Si-containing composite material may be used in combination, and it is preferable from the viewpoint of achieving both of a higher capacity and higher durability of the battery. Note that as the negative electrode, an Li-metal negative electrode can be used.

In the cylindrical battery 10, the negative electrode lead 19 is connected to a bottom inner surface of the housing can 15 by means of welding or the like. The positive electrode lead 18 extends toward the sealing assembly 16 side, and is connected to a lower surface of an internal terminal plate 21 which is a bottom plate of the sealing assembly 16. Therefore, in the present embodiment, the sealing assembly 16 serves as a positive electrode external terminal, and the housing can 15 serves as a negative electrode external terminal.

For the separator 13, a porous sheet having ion permeability and an insulation property is used. Specific examples of the porous sheet include a microporous thin film, a woven fabric, and a non-woven fabric. A material of the separator 13 is preferably polyolefin such as polyethylene or polypropylene, cellulose, or the like. The separator 13 may have a single-layered structure or a multilayered structure. On a surface of the separator 13, a resin layer having high heat resistance, such as an aramid resin, may be formed. On a boundary between the separator 13 and at least one of the positive electrode 11 and the negative electrode 12, a filler layer including an inorganic filler may be formed. Although a detail will be described later, in the present embodiment, the separator 13 is disposed to be located at the outermost circumference of the electrode assembly 14.

The housing can 15 is a bottomed cylindrical metallic container in which one side in an axial direction is opened, as described above. A gasket 26 is provided between the housing can 15 and the sealing assembly 16, so that the sealability inside the battery and the insulation between the housing can 15 and the sealing assembly 16 are ensured. After the electrode assembly 14 is housed in the housing can 15, a groove 20 is formed by causing a part of a side surface portion of the housing can 15 to project inward to support the sealing assembly 16. The groove 20 is preferably formed in an annular shape along a circumferential direction of the housing can 15, and supports the sealing assembly 16 on the upper surface thereof. The groove 20 is formed in an annular shape over the entire circumference of the housing can 15 by performing spinning, for example. The sealing assembly 16 is fixed on an upper portion of the housing can 15 with the groove 20 and with an end portion of an opening of the housing can 15 crimped to the sealing assembly 16.

The sealing assembly 16 has a structure in which the internal terminal plate 21, a lower vent member 22, an insulating member 23, an upper vent member 24, and a cap 25 are stacked in this order from the electrode assembly 14 side. Each member constituting the sealing assembly 16 has, for example, a disk shape or a ring shape, and each member except for the insulating member 23 is electrically connected to each other. The lower vent member 22 and the upper vent member 24 are connected at respective center portions, and the insulating member 23 is interposed between the respective circumferential edge portions of the vent members 22 and 24. If an abnormality occurs in the battery and the internal pressure of the battery increases, the lower vent member 22 is deformed so as to push the upper vent member 24 up toward the cap 25 side and ruptures, and thereby a current pathway between the lower vent member 22 and the upper vent member 24 is cut off. If the internal pressure further increases, the upper vent member 24 ruptures, and gas is discharged through an opening portion of the cap 25.

As illustrated in FIG. 2, a tape 50 is attached to the outer circumferential surface of the electrode assembly 14. The tape 50 is attached to each of axial end portions of the outer circumferential surface of the electrode assembly 14. The tape 50 is a winding stopper tape for fixing a winding finish end 13x of the wound structure of the electrode assembly 14 and retaining the wound structure of the electrode assembly 14.

In the present embodiment, a winding outer circumferential portion which is an outermost circumference of the electrode assembly 14 is formed by the separator 13, and an end portion of the separator 13 in the longitudinal direction is the winding finish end 13x of the wound structure. The tape 50 is attached across the winding finish end 13x in the outer circumferential surface (separator 13) of the electrode assembly 14, and fixes the winding finish end 13x. The tape 50 is preferably set not to contact an extension portion 60 of the separator 13. The tape 50 is preferably provided so that its longitudinal direction is along the circumferential direction of the electrode assembly 14.

The separator 13 in the winding outer circumferential portion will be described in detail with reference to FIG. 2.

As illustrated in FIG. 2, the winding outer circumferential portion which is the outermost circumference of the electrode assembly 14 is formed by winding the separator 13 while displacing the separator 13 relative to the axial direction of the electrode assembly 14. The separator 13 in the winding outer circumferential portion comprises the extension portion 60 in which one end edge of the separator extends in the axial direction of the electrode assembly 14 farther than an end edge of the electrode assembly 14. More specifically, the extension portion 60 is wound to be displaced relative to the axial direction of the electrode assembly 14, and extends from the end edge of the electrode assembly 14 toward the annular groove 20 formed in the housing can 15.

After the electrode assembly 14 to which the tape 50 is attached as illustrated in FIG. 2 is housed in the housing can 15, the groove 20 is formed in the housing can 15, and the extension portion 60 of the separator 13 is pressed against the groove 20 and is bent toward a radially inner side of the electrode assembly 14. Thus, the extension portion 60 is interposed between the groove 20 of the housing can 15 functioning as the negative electrode external terminal and the electrode assembly 14, and functions as an insulating portion that prevents an electrical contact between the groove 20 and the electrode assembly 14. That is, the separator 13 is an element constituting the electrode assembly 14, and is also an insulating portion that prevents a short circuit between the electrode assembly 14 and the groove 20.

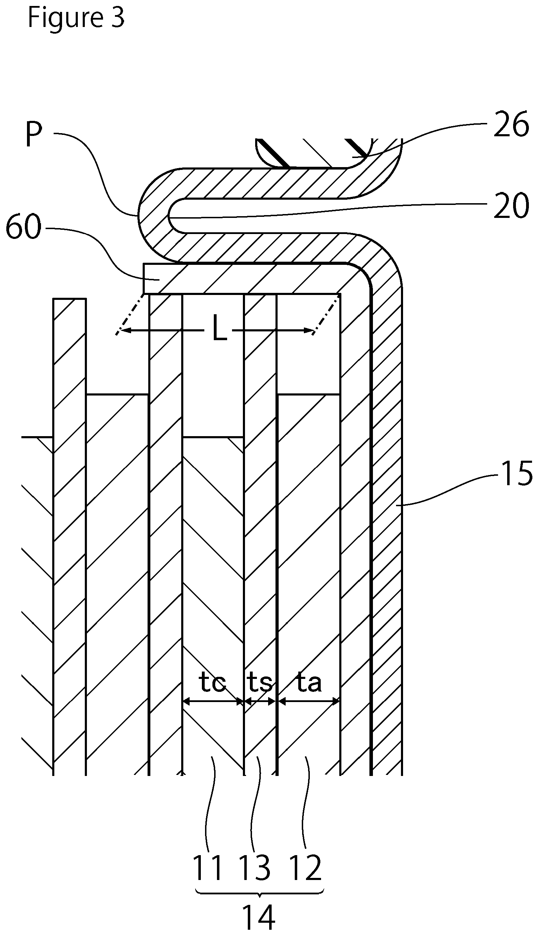

Th extension portion 60 of the separator 13 in the winding outer circumferential portion will be described in detail with reference to FIGS. 2 and 3. FIG. 3 illustrates an enlarged portion of a portion A in FIG. 1.

When the extension portion 60 is bent toward a radially inner side of the electrode assembly 14, the extension portion 60 preferably extends more radially inward than a tip P of the groove 20. The tip P is a portion located at a radially innermost part of the groove 20. In this case, a surface (lower surface of the groove 20) of the groove 20 that faces the electrode assembly 14 is completely covered by the extension portion 60 of the separator 13, so that a short circuit between the electrode assembly 14 and the groove 20 can be prevented more effectively. A length L of the extension portion 60 along the radial direction of the electrode assembly 14 may be the same as a length of the groove 20 along the radial direction, but may be, for example, greater than or equal to 1.1 times and less than or equal to 2.0 times the length of the groove 20 so that the entire lower surface of the groove 20 is more reliably covered by the extension portion 60.

When a thickness of the positive electrode 11 is defined as tc, a thickness of the negative electrode 12 is defined as ta, and a thickness of the separator 13 is defined as ts, the length L of the extension portion 60 of the separator 13 in the winding outer circumferential portion preferably satisfies L ≥ tc + ta + ts. This makes it possible to protect the positive electrode 11 located at least on the outermost circumference side with the extension portion 60 when the extension portion 60 of the separator 13 is bent.

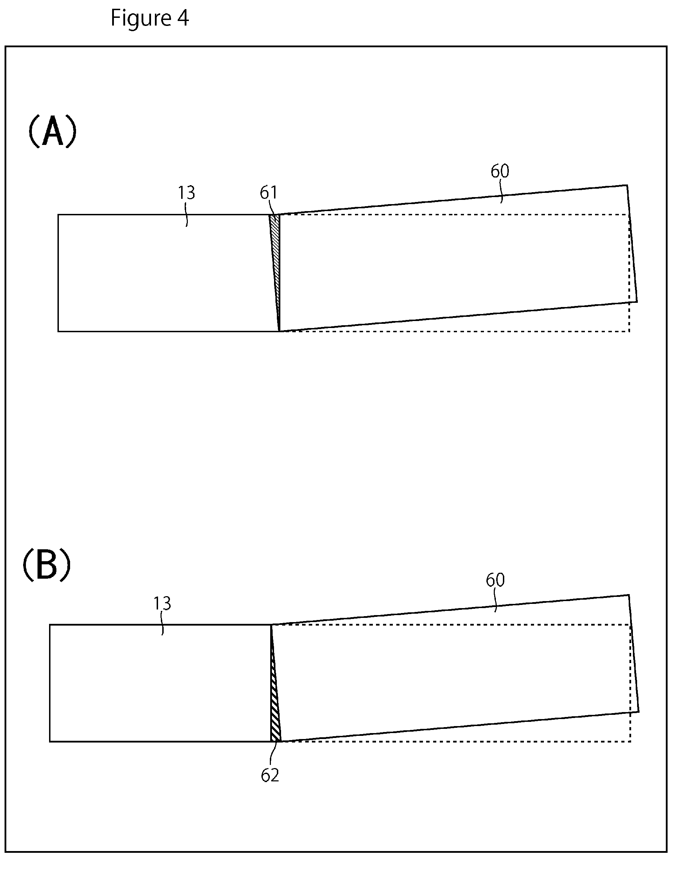

A configuration by which the separator 13 in the winding outer circumferential portion forms the extension portion 60 will be described in detail with reference to FIG. 4. FIG. 4 is a plan view illustrating the separator 13 in the winding outer circumferential portion.

As described above, the extension portion 60 is formed by displacing the separator 13 in the winding outer circumferential portion relative to the axial direction of the electrode assembly 14. Here, the term "displacing" means that the separator 13 in the winding outer circumferential portion extends gradually in the axial direction of the electrode assembly 14 to form the spiral extension portion 60. At this time, the separator 13 in the winding outer circumferential portion is preferably wound on the outermost circumference of the electrode assembly 14 one turn or more. In order for the extension portion 60 to spirally extend, the extension portion 60 is preferably wound until the length L of the extension portion 60 at a position where the length L is the smallest satisfies the above-described conditions of the length L of the extension portion 60. When the separator 13 is located in the winding outer circumferential portion, the positive electrode 11 and the negative electrode 12 may be cut in the course of winding.

At the displacement start of the separator 13, a triangular overlapping portion 61 as illustrated in FIG. 4A is formed. The overlapping portion 61 is formed by folding the separator 13 back toward a winding start direction in a triangular shape so that the separator 13 is inclined and extends obliquely. This forms the extension portion 60 in which the separator 13 spirally extends from the electrode assembly 14.

As illustrated in FIG. 4B, to form the extension portion 60, a triangular stretching portion 62 may be formed. The stretching portion 62 is formed by winding the separator 13 while pulling the separator 13 in an upward direction, and a stretch amount of the separator 13 increases toward the lower side. This forms the extension portion 60 in which the separator 13 spirally extends from the electrode assembly 14.

The overlapping portion 61 and the stretching portion 62 may be formed so that the end edge of the separator 13 is parallel to the end edge of the electrode assembly 14 in the course of winding of the extension portion 60. That is, the triangular shape formed at the displacement start of the separator 13 may be formed upside down in the course of winding of the extension portion 60.Thus, the extension portion 60 can be formed so that the length L of the extension portion 60 is constant.

According to the above-described configuration, the groove 20 of the housing can 15 is insulated from the electrode assembly 14 by the separator 13 in the winding outer circumferential portion. This makes it possible to omit an upper insulating plate set to insulate the groove 20 from the electrode assembly 14. Accordingly, the number of components of the cylindrical battery 10 can be reduced, and the number of manufacturing processes can be reduced.

The above-described embodiment can be suitably modified in design within a scope of not adversely affecting the advantage of the present disclosure. For example, in the above-described embodiment, the housing can 15 functions as the negative electrode external terminal, but the positive electrode lead 18 can be connected to the housing can 15 to function as the positive electrode external terminal.

In the above-described embodiment, the extension portion 60 is formed by integrally forming the separator 13 in the winding outer circumferential portion with the electrode assembly 14, but the extension portion 60 may be formed using a separator piece cut from the separator 13. In this case, after the positive electrode 11, the negative electrode 12, and the separator 13 are cut, the extension portion 60 can be formed by displacing the separator piece in the axial direction of the electrode assembly 14 and winding the separator piece. Thus, the end edge of the extension portion 60 has a flat shape, and the separator 13 does not extend by a necessary extension length or more as the extension portion 60. The separator piece additionally wound is preferably wound on the outermost circumference of the electrode assembly 14 at least one turn.

The electrode assembly 14 may have a lead extending toward the sealing assembly 16 side from a position facing the groove 20. The lead is, for example, the positive electrode lead 18. A plurality of positive electrode leads 18 may be provided in the longitudinal direction of the positive electrode 11, and the parts thereof may extend from the position facing the groove 20. In this case, the extension portion 60 of the separator 13 is disposed between the groove 20 and the positive electrode leads 18, so that a contact between the groove 20 and the positive electrode leads 18 can be prevented. Accordingly, the separator 13 and the positive electrode leads 18 are interposed between the groove 20 and the electrode assembly 14. In other words, the leads can be easily provided at positions facing the groove 20 of the electrode assembly 14 by using the separator 13 as the insulating portion.

The present disclosure will be further described by the following embodiments.

Configuration 1: A cylindrical battery comprising: a wound-type electrode assembly in which a positive electrode and a negative electrode are wound with a separator interposed the positive electrode and the negative electrode; a housing can that has a bottomed cylindrical shape for housing the electrode assembly and in which an annular groove projecting inward is formed in a vicinity of an opening portion; and a sealing assembly that is positioned by the groove and with which the opening portion of the housing can is capped, in which in a winding outer circumferential portion of the electrode assembly, the separator is wound to be displaced relative to an axial direction of the electrode assembly, the separator in the winding outer circumferential portion comprises an extension portion in which one end edge of the separator extends in the axial direction of the electrode assembly farther than an end edge of the electrode assembly, and the extension portion is bent toward a radially inner side of the electrode assembly, and is interposed between the groove and the electrode assembly to insulate the groove from the electrode assembly.

Configuration 2: The cylindrical battery described in configuration 1, in which the extension portion extends toward the radially inner side of the electrode assembly beyond a tip of the groove.

Configuration 3: The cylindrical battery described in configuration 1 or 2, in which the extension portion spirally extends from the electrode assembly, and is formed with a triangular stretching portion provided in the separator in the winding outer circumferential portion.

Configuration 4: The cylindrical battery described in configuration 1 or 2, in which the extension portion spirally extends from the electrode assembly, and is formed with a triangular overlapping portion provided in the separator in the winding outer circumferential portion.

Configuration 5: The cylindrical battery described in any one of configurations 1 to 4, in which when a thickness of the positive electrode is defined as tc, a thickness of the negative electrode is defined as ta, and a thickness of the separator is defined as ts, an extension length L of the separator in the winding outer circumferential portion satisfies L ≥ tc + ta + ts.

Configuration 6: A cylindrical battery comprising: a wound-type electrode assembly in which a positive electrode and a negative electrode are wound with a separator interposed the positive electrode and the negative electrode; a housing can that has a bottomed cylindrical shape for housing the electrode assembly and in which an annular groove projecting inward is formed in a vicinity of an opening portion; and a sealing assembly that is positioned by the groove and with which the opening portion of the housing can is capped, in which in a winding outer circumferential portion of the electrode assembly, a separator piece cut from the separator is wound to be displaced relative to an axial direction of the electrode assembly, the separator piece in the winding outer circumferential portion comprises an extension portion in which one end edge of the separator piece extends in the axial direction of the electrode assembly farther than an end edge of the electrode assembly, and the extension portion is bent toward a radially inner side of the electrode assembly, and is interposed between the groove and the electrode assembly to insulate the groove from the electrode assembly.

### REFERENCE SIGNS LIST

10 Cylindrical battery, 11 Positive electrode, 12 Negative electrode, 13 Separator, 13x Winding finish end, 14 Electrode assembly, 15 Housing can, 16 Sealing assembly, 17 Insulating plate, 18 Positive electrode lead, 19 Negative electrode lead, 20 Groove, 21 Internal terminal plate, 22 Lower vent member, 23 Insulating member, 24 Upper vent member, 25 Cap, 26 Gasket, 30 Positive electrode core, 31 Positive electrode mixture layer, 40 Negative electrode core, 41 Negative electrode mixture layer, 50 Tape, 60 Extension portion

## Claims

1. A cylindrical battery comprising:
a wound-type electrode assembly in which a positive electrode and a negative electrode are wound with a separator interposed the positive electrode and the negative electrode;
a housing can that has a bottomed cylindrical shape for housing the electrode assembly and in which an annular groove projecting inward is formed in a vicinity of an opening portion; and
a sealing assembly that is positioned by the groove and with which the opening portion of the housing can is capped, wherein
in a winding outer circumferential portion of the electrode assembly, the separator is wound to be displaced relative to an axial direction of the electrode assembly,
the separator in the winding outer circumferential portion comprises an extension portion in which one end edge of the separator extends in the axial direction of the electrode assembly farther than an end edge of the electrode assembly, and
the extension portion is bent toward a radially inner side of the electrode assembly, and is interposed between the groove and the electrode assembly to insulate the groove from the electrode assembly.

2. The cylindrical battery according to claim 1, wherein
the extension portion extends toward the radially inner side of the electrode assembly beyond a tip of the groove.

3. The cylindrical battery according to claim 1, wherein
the extension portion spirally extends from the electrode assembly, and is formed with a triangular stretching portion provided in the separator in the winding outer circumferential portion.

4. The cylindrical battery according to claim 1, wherein
the extension portion spirally extends from the electrode assembly, and is formed with a triangular overlapping portion provided in the separator in the winding outer circumferential portion.

5. The cylindrical battery according to any one of claims 1 to 4, wherein
when a thickness of the positive electrode is defined as tc, a thickness of the negative electrode is defined as ta, and a thickness of the separator is defined as ts, an extension length L of the separator in the winding outer circumferential portion satisfies L ≥ tc + ta + ts.

6. A cylindrical battery comprising:
a wound-type electrode assembly in which a positive electrode and a negative electrode are wound with a separator interposed the positive electrode and the negative electrode;
a housing can that has a bottomed cylindrical shape for housing the electrode assembly and in which an annular groove projecting inward is formed in a vicinity of an opening portion; and
a sealing assembly that is positioned by the groove and with which the opening portion of the housing can is capped, wherein
in a winding outer circumferential portion of the electrode assembly, a separator piece cut from the separator is wound to be displaced relative to an axial direction of the electrode assembly,
the separator piece in the winding outer circumferential portion comprises an extension portion in which one end edge of the separator piece extends in the axial direction of the electrode assembly farther than an end edge of the electrode assembly, and
the extension portion is bent toward a radially inner side of the electrode assembly, and is interposed between the groove and the electrode assembly to insulate the groove from the electrode assembly.
